# EUROPÄISCHE PATENTSCHRIFT

(11) **EP 1 995 417 B1**
(45) Veröffentlichungstag und Bekanntmachung des Hinweises auf die Patenterteilung: **06.01.2010**
(21) Anmeldenummer: 08156346.2
(22) Anmeldetag: 16.05.2008
(51) Int. Cl.: F01L 1/047, F02F 1/24

(54) **Nockenwelle**
Cam shaft
Arbre à came

(30) Priorität: 22.05.2007 DE 102007024092
(43) Veröffentlichungstag der Anmeldung: 26.11.2008
(73) Patentinhaber: Mahle International GmbH, 70376 Stuttgart (DE)
(72) Erfinder: Flender, Thomas, 71277 Rutesheim (DE); Kreisig, Michael, 70197 Stuttgart (DE); Schneider, Falk, 70825 Korntal-Münchingen (DE)
(74) Vertreter: Bongen, Renaud & Partner

(56) Entgegenhaltungen:
- EP-A- 1 380 729
- EP-A- 1 460 240
- DE-C1- 4 408 572
- JP-A- 8 284 617
- JP-A- 2002 349 388
- JP-A- 2004 116 297
- JP-A- 2005 307 840
- US-A- 4 696 266

## Beschreibung

Die Erfindung betrifft eine Nockenwelle für Verbrennungsmotoren von Kraftfahrzeugen, die über zumindest ein Rollenlager an einem Zylinderkopfgehäuse gelagert ist.

Nockenwellen werden üblicherweise in Nockenwellenlagern gelagert, die in der Regel als Buchsen aus Werkstoffen wie zum Beispiel Aluminium-Legierungen oder als Lagerhalbschalen aus Werkstoffen auf der Basis von Kupferlegierungen hergestellt sind. Dennoch sind auch andere Lagerungsarten, wie beispielweise ein Rollenlager aus dem Stand der Technik bekannt. Eine Axiallagerfunktion für die Nockenwelle wird üblicherweise über eine sogenannte Anlaufscheibe, welche auch als "Trust-Plate" bekannt ist, übernommen. Derartige Anlaufscheiben haben aber im Vergleich zu anderen Lagereinrichtungen eine deutlich kürzere Lebenserwartung, so dass diese üblicherweise turnusmäßig ausgetauscht werden müssen.

Die Erfindung beschäftigt sich mit dem Problem, eine verbesserte Ausführungsform für eine Nockenwelle anzugeben, bei welcher insbesondere eine Axiallagerung verbessert ist. Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, ein Axiallager für eine Nockenwelle für Verbrennungsmotoren von Kraftfahrzeugen als Kugel- oder als Rollenlager auszubilden und dadurch einerseits die Lebenserwartung des Axiallagers deutlich zu verlängern und andererseits die Axiallagerung insgesamt zu verbessern. Gleichzeitig kann die derart in Axialrichtung gelagerte Nockenwelle über weitere als Rollenlager ausgebildete Lagereinrichtungen an einem Zylinderkopf gelagert sein, wodurch die gesamte Lagerung der Nockenwelle im Vergleich zu aus dem Stand der Technik bekannten Lagerungen verbessert werden kann.

Bei einer vorteilhaften Weiterbildung der erfindungsgemäßen Lösung weist wenigstens ein als Rollenlager ausgebildetes Axiallager eine direkt auf der Nockenwelle laufende Rolle auf, wobei ein mit der Rolle in Kontakt tretender Bereich der Nockenwelle gehärtet ist. Hierdurch lässt sich eine besonders effektive Lagerung der Nockenwelle erreichen, wobei eine Härtung des mit der Rollen in Kontakt tretenden Bereichs beispielsweise über ein induktives und dadurch sehr zielgenaues Erhitzen sowie ein anschließendes schnelles Abkühlen gehärtet werden kann. Die Härtung erhöht dabei die Verschleißfestigkeit der Nockenwelle, wodurch deren Lebensdauer verlängert werden kann.

Alternativ hierzu kann bei einer weiteren Ausführungsform im Bereich des als Rollenlager ausgebildeten Axiallagers eine direkt auf der Nockenwelle angeordnete Hülse vorgesehen sein, auf welcher die Rolle des Rollenlagers rollt. Eine derartige Hülse kann beispielsweise ebenfalls gehärtet sein und dadurch im Vergleich zu einem ungehärteten Material eine deutlich verbesserte Verschleißfestigkeit aufweisen. Gleichzeitig kann eine derartige Hülse bezüglich ihrer Materialeigenschaften so gewählt werden, dass besonders gute Lagereigenschaften erzielt werden können.

Zweckmäßig sind die Nocken und/oder das Rollenlager und/oder das wenigstens eine Axiallager mittels eines thermischen Fügeverfahrens, mittels eines Pressverbandes oder mittels Kleben mit der Nockenwelle verbunden, wobei zum Fügen mit der Nockenwelle ausschließlich fertig bearbeitete Nocken und/oder Rollenlager und/oder Axiallager verwendet werden. Durch die fertig bearbeiteten Bauteile erübrigt sich ein Nachbearbeiten der Nocken beziehungsweise der Nockenwelle nach dem Verbinden der vorgenannten Bauteile mit der Nockenwelle, wodurch verhindert werden kann, dass beispielsweise Schleifstaub in die Rollenlager eindringt und diese im späteren Betrieb beeinträchtigt.

Zweckmäßig ist das wenigstens eine als Kugel- oder Rollenlager ausgebildete Axiallager zwischen zwei Nocken der Nockenwelle angeordnet und stützt sich direkt an diesen ab. Hierdurch wird das Axiallager bezüglich seiner Axialrichtung zwischen den beiden Nocken fixiert, ohne dass hierfür weitere, beispielsweise aufwändig herzustellende, Fixierelemente benötigt werden. Denkbar ist auch, dass sich das wenigstens eine als Kugel- oder Rollenlager ausgebildete Axiallager indirekt über zwei Distanzelemente, insbesondere über zwei Distanzhülsen, an den beiden Nocken abstützt. Derartige Distanzhülsen bieten den großen Vorteil, dass das Axiallager nicht unbedingt im Bereich direkt neben den Nocken angeordnet werden muss, sondern je nach axialer Länge der gewählten Hülse an einem für den Einbau des Axiallagers günstigen Ort angeordnet werden kann. Diese Distanzhülsen können alternativ auch fest mit den benachbarten Nocken verbunden sein, was eine verkürzte Montagezeit der Nockenwelle mit sich bringt.

Vorteilhafte, nachstehend noch erläuterte Ausführungsbeispiele sind in den Zeichnungen dargestellt.

In diesen zeigen, jeweils schematisch,
- Fig. 1: eine erfindungsgemäße Nockenwelle,
- Fig. 2a bis d: unterschiedliche Ausführungsformen von als Kugellager ausgebildeten Axiallagern,
- Fig. 3: eine mögliche Ausführungsform von Axiallagern einer Nockenwelle im Einbauzustand,
- Fig. 4: eine Schnittdarstellung durch eine Nockenwelle mit einem erfindungsgemäßen Axiallager,
- Fig. 5: eine Detaildarstellung eines erfindungsgemäßen Axiallagers,
- Fig. 6: eine Ansicht auf eine erfindungsgemäße Nockenwelle,
- Fig. 7: eine Ansicht auf eine erfindungsgemäße Nockenwelle,
- Fig. 8: ein als Rollenlager ausgebildetes Radiallager,
- Fig. 9: eine Darstellung wie in Fig. 8, jedoch bei einer anderen Ausführungsform,
- Fig. 10: ein als Rollenlager ausgebildetes Axiallager (durch Kraftschluss in Position gehalten)
- Fig. 11 bis 13: einen Schnitt durch eine erfindungsgemäße Nockenwelle bei jeweils einer anderen Ausführungsform.

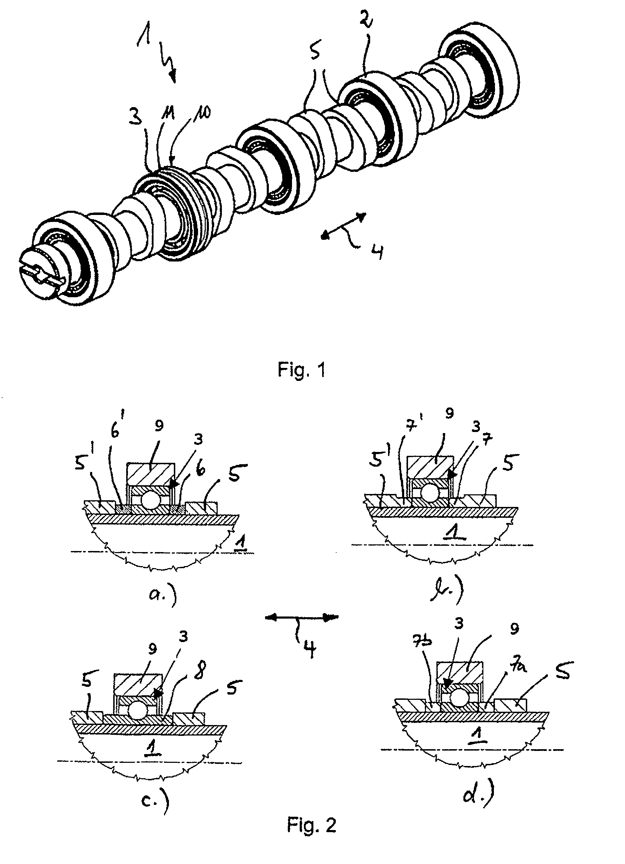

Entsprechend Fig. 1 weist eine erfindungsgemäße Nockenwelle 1 für Verbrennungsmotoren von Kraftfahrzeugen, zumindest ein Rollenlager 2 auf, über welches die Nockenwelle 1 an einem nicht dargestellten Zylinderkopfgehäuse 15 gelagert ist. Darüber hinaus weist die Nockenwelle 1 zumindest ein Axiallager 3 auf, welches die Nockenwelle 1 in Axialrichtung 4 lagert und welches als Kugel- oder als Rollenlager ausgebildet ist. Die Nockenwelle 1 entsprechend Fig. 1 ist eine Nockenwelle für Motoren mit einer so genannten "Tunnellagerung". Das heißt die Nockenwelle 1 wird in Richtung der Nockenwelleachse 4 in die Nockenwellenlagerung des Kurbelgehäuses eingeschoben.

Gemäß den Fig. 2a bis 2d sind dabei unterschiedliche Ausführungsformen der als Kugellager ausgebildeten Axiallager 3 dargestellt. In Fig. 2a ist ein als Kugellager ausgebildetes Axiallager 3 gezeigt, welches in Axialrichtung 4 zwischen zwei Nocken 5 und 5' angeordnet ist und sich indirekt über zwei Distanzhülsen 6, 6' an den Nocken 5, 5' abstützt. Die Distanzhülsen 6, 6' können dabei allgemein auch als Distanzelemente bezeichnet werden.

Demgegenüber ist in Fig. 2b ein Axiallager 3 gezeigt, welches ebenfalls zwischen zwei Nocken 5 und 5' angeordnet ist, welches sich jedoch direkt an den benachbarten Nocken 5 und 5' abstützt und zwar jeweils über einen Bund 7, 7', welcher Bestandteil der Nocken 5, 5' ist. Der Bund 7, 7' erfüllt dabei in Fig. 2b die Aufgabe der Distanzhülsen 6, 6' in Fig. 2a.

In Fig. 2c ist ein nockenwellenseitiger Teil 8 (Bushing) des Axiallagers 3 in Axialrichtung so breit ausgebildet, dass sich das Axiallager 3 ebenfalls direkt an den benachbarten Nocken 5 und 5' abstützten kann.

In Fig. 2d ist eine Ausführungsform gezeigt, bei welcher sich das als Kugellager ausgebildete Axiallager 3 ebenfalls zwischen zwei Nocken 5 und 5' der Nockenwelle 1 befindet und sich an einem Bund 7a und 7b der Nocken 5 und 5' abstützt, wobei der jeweilige Bund 7a und 7b nicht Bestandteil des Nockens 5 und 5' ist, sondern an diesem angelötet, angeschweißt oder angeklebt wird.

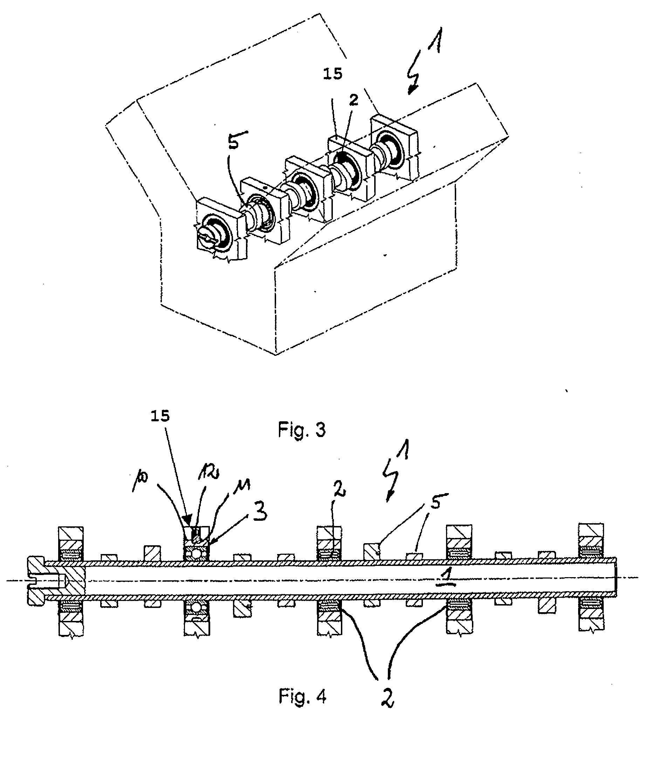

In Fig. 4 ist eine Nockenwelle 1 im Schnitt dargestellt, wobei gut die Rollenlager 2 sowie das zumindest eine Axiallager 3 zu erkennen sind.

Bei dem Axiallager 3 gemäß den Fig. 1 bis 6 ist das Axiallager 3 als Kugellager ausgebildet und weist einen Lagerring 9 auf, an dessen äußerer Mantelfläche 10 eine umlaufende Nut 11 vorgesehen ist, in welche ein zylinderkopfseitiges Verbindungselement 12, insbesondere eine Madenschraube oder ein Stift, eingreift und dadurch die Nockenwelle 1 in Axialrichtung 4 festlegt.

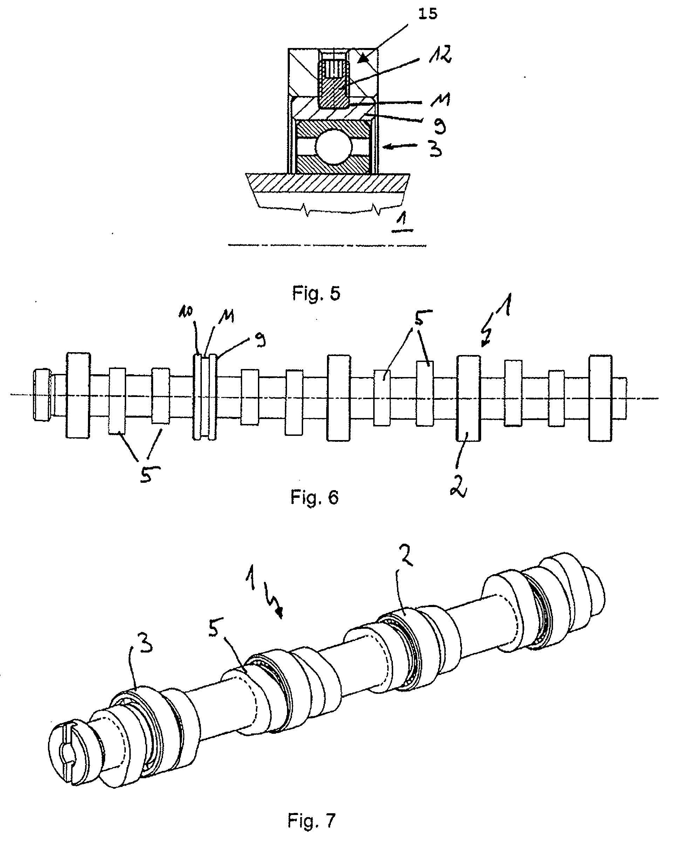

Besonders gut ist dies in Fig. 5 zu erkennen, wobei das Verbindungsmittel 12 hier als Madenschraube ausgebildet ist und in die Nut 11 des Lagerringes 9 eingreift. Eine besonders deutliche Darstellung der auf dem Lagerring 9 angeordneten Nut 11 ist in Fig. 6 gezeigt.

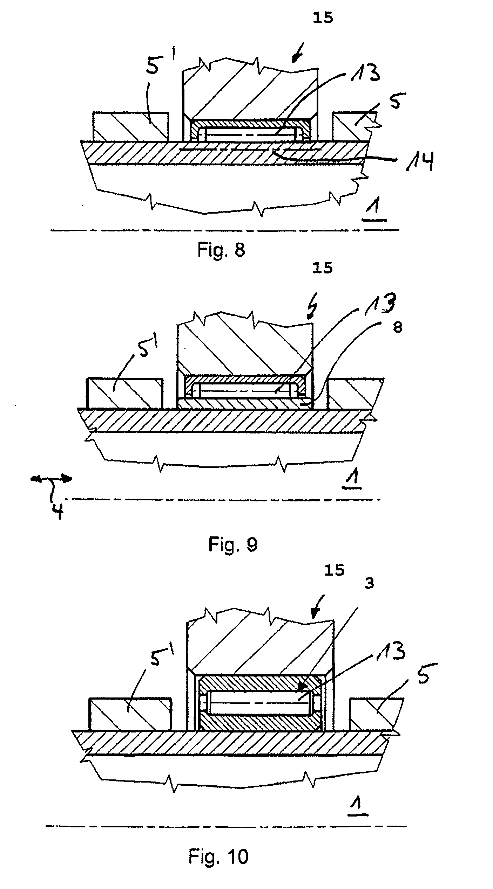

Demgegenüber weist die Nockenwelle 1 gemäß der Fig. 7 kein als Kugellager ausgebildetes Axiallager 3 auf, sondern ein als Rollenlager ausgebildetes Axiallager gemäß den Fig. 8 bis 10.

Gemäß Fig. 8 weist das wenigstens eine als Rollenlager ausgebildete Radiallager eine direkt auf der Nockenwelle 1 laufende Rolle 13 auf, wobei der mit der Rolle 13 in Kontakt tretende Bereich 14 der Nockenwelle 1 gehärtet ist. Demgegenüber ist bei dem Axiallager 3 gemäß der Fig. 9 im Bereich 14 des als Rollenlager ausgebildeten Axiallagers 3 eine direkt auf der Nockenwelle 1 angeordnete Bushing 8 vorgesehen, auf welcher die Rolle 13 des Rollenlagers, das heißt des Radiallagers, rollt. Selbstverständlich kann auch die Bushing 8 aus einem besonders verschleißbeständigen Material bestehen oder einem Vergütungsverfahren unterzogen sein, welche die Verschleißbeständigkeit erhöht.

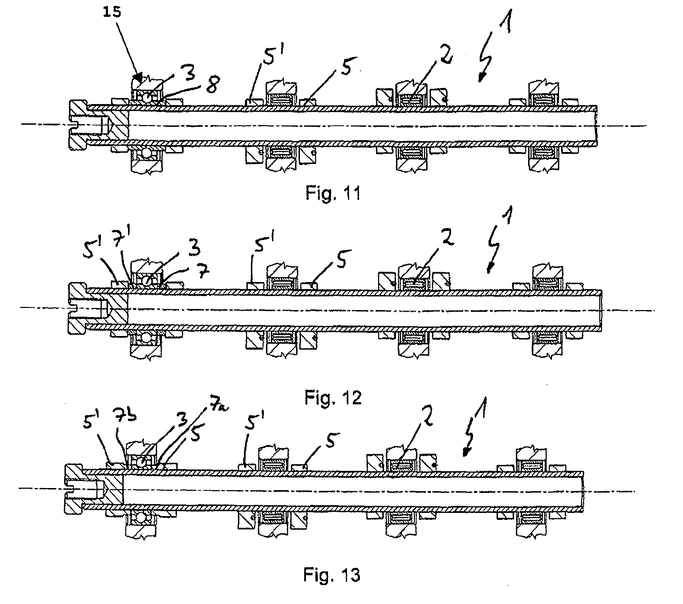

In den Fig. 11 bis 13 sind nochmals die als Kugellager ausgebildeten Axiallager 3 aus den Fig. 2b bis 2d in ihrer Einbaulage gezeigt.

Die Nockenwellen 1 entsprechend Fig. 7 bis 11 sind Nockenwellen 1 für Motoren mit einer so genannten "offenen Lagerung". Das heißt die Nockenwelle 1 wird in die Nockenwellenlagerung des Zylinderkopfes 15 parallel zur Nockenwelleachse 4 und durch Lagerdeckel in Position gehalten.

Prinzipiell sind bei der erfindungsgemäßen Nockenwelle 1 die Nocken 5 und/oder das Rollenlager 2 und/oder das wenigstens eine Axiallager 3 mittels eines thermischen Fügeverfahrens, mittels eines Pressverbandes oder mittels einer Klebung mit der Nockenwelle 1 verbunden. Von besonderem Vorteil ist dabei, dass zum Fügen mit der Nockenwelle 1 ausschließlich fertig bearbeitete Nocken 5 und/oder Rollenlager 2 und/oder Axiallager 3 verwendet werden, so dass die Nockenwelle 1 nach dem Aufbringen der genannten Komponenten nicht mehr bearbeitet werden muss und dadurch kein Schleif- beziehungsweise Bearbeitungsstaub in die Lager gelangen und diese auf Dauer schädigen kann.

Durch die erfindungsgemäße Nockenwelle 1 ist es möglich, eine bisher übliche, zur Axiallagerung der Nockenwelle 1 erforderliche Anlaufscheibe durch das erfindungsgemäße Axiallager 3 zu ersetzen, welches einerseits eine deutlich höhere Lebenserwartung aufweist und andererseits hilft, insbesondere Wartungskosten zu reduzieren.

Bei einem besonders bevorzugten Verfahren zur Herstellung der Nockenwelle 1 werden auf dieser geschlossene Rollenlager 2 während der Nockenwellenmontage aufgebracht.

## Patentansprüche

1. Zylinderkopf eines Verbrennungsmotors mit einer Nockenwelle (1), die über zumindest ein Rollenlager (2) an einem Zylinderkopfgehäuse (15) gelagert ist, wobei zumindest ein Axiallager (3) vorgesehen ist, welches die Nockenwelle (1) in Axialrichtung (4) lagert und welches als Kugel- oder ebenfalls als Rollenlager ausgebildet ist,
**dadurch gekennzeichnet,**
**dass** das wenigstens eine als Kugel- oder Rollenlager ausgebildete Axiallager (3) zwischen zwei Nocken (5, 5') der Nockenwelle (1) angeordnet ist.

2. Zylinderkopf nach Anspruch 1,
**dadurch gekennzeichnet,**
**dass** wenigsten ein als Kugellager ausgebildetes Axiallager (3) einen Lagerring (9) aufweist, an dessen äußerer Mantelfläche (10) eine umlaufende Nut (11) vorgesehen ist, in welche ein zylinderkopfseitiges Verbindungselement (12), insbesondere eine Madenschraube oder ein Stift, eingreift.

3. Zylinderkopf nach Anspruch 1,
**dadurch gekennzeichnet,**
**dass** wenigstens ein als Rollenlager ausgebildetes Lager eine direkt auf der Nockenwelle (1) laufende Rolle (13) aufweist, wobei der mit der Rolle (13) in Kontakt tretende Bereich (14) der Nockenwelle (1) gehärtet ist.

4. Zylinderkopf nach Anspruch 1,
**dadurch gekennzeichnet,**
**dass** im Bereich des als Rollenlager ausgebildeten Lagers eine direkt auf der Nockenwelle (1) angeordnete Hülse (8) vorgesehen ist, auf welcher die Rolle (13) des Rollenlagers (2) rollt.

5. Zylinderkopf nach Anspruch 4,
**dadurch gekennzeichnet,**
- **dass** die Hülse (8) gehärtet ist, und/oder
- **dass** die Hülse (8) durch Kleben, Schrumpfen oder Schweißen mit der Nockenwelle (1) gefügt ist.

6. Zylinderkopf nach einem der Ansprüche 1 bis 5,
**dadurch gekennzeichnet,**
**dass** das wenigstens eine als Kugel- oder Rollenlager ausgebildete Axiallager (3) sich direkt an den Nocken (5, 5') abstützt.

7. Zylinderkopf nach einem der Ansprüche 1 bis 5,
**dadurch gekennzeichnet,**
**dass** das wenigstens eine als Kugel- oder Rollenlager ausgebildete Axiallager (3) sich indirekt über zwei Distanzelemente (6, 6'), insbesondere über zwei Distanzhülsen (6, 6'), an den Nocken (5, 5') abstützt.

8. Zylinderkopf nach einem der Ansprüche 1 bis 5,
**dadurch gekennzeichnet,**
**dass** das wenigstens eine als Kugel- oder Rollenlager ausgebildete Axiallager (3) sich an einem jeweiligen Bund (7, 7') der Nocken (5, 5') abstützt, wobei der jeweilige Bund (7, 7') Bestandteil des jeweiligen Nockens (5, 5') ist.

9. Zylinderkopf nach einem der Ansprüche 1 bis 5,
**dadurch gekennzeichnet,**
**dass** das wenigstens eine als Kugel- oder Rollenlager ausgebildete Axiallager (3) sich an einem Bund (7a, 7b) der Nocken (5, 5') abstützt, der am benachbarten Nocken (5, 5') angelötet, angeschweißt oder angeklebt ist.

10. Zylinderkopf nach einem der Ansprüche 1 bis 9,
**dadurch gekennzeichnet,**
- **dass** die Nocken (5, 5') und/oder das Rollenlager (2) und/oder das wenigstens eine Axiallager (3) mittels eines thermischen Fügeverfahrens, mittels eines Pressverbandes oder mittels Kleben mit der Nockenwelle (1) verbunden ist/sind,
- **dass** zum Fügen mit der Nockenwelle (1) ausschließlich fertig bearbeitete Nocken (5, 5') und/oder Rollenlager (2) und/oder Axiallager (3) und/oder Zusatzelemente wie ein Signalgeberrad vorgesehen sind.

11. Zylinderkopf nach einem der vorgenannten Ansprüche,
**dadurch gekennzeichnet,**
**dass** die Nockenwelle (1) in einem Verbrennungsmotor tunnelgelagert oder offenen gelagert ist.

12. Zylinderkopf nach einem der vorgenannten Ansprüche,
**dadurch gekennzeichnet,**
**dass** auf der Nockenwelle (1) geschlossene Rollenlager während der Nockenwellenmontage aufgebracht sind/werden.

## Claims

1. A cylinder head of an internal combustion engine having a camshaft (1) that is mounted on a cylinder-head housing (15) by means of at least one roller bearing (2), wherein at least one axial bearing (3) is provided that mounts the camshaft (1) in an axial direction (4) and that furthermore is configured as a ball bearing or likewise as a roller bearing,
**characterised in that**
the at least one axial bearing (3) configured as a ball or roller bearing is arranged between two cams (5, 5') of the camshaft (1).

2. The cylinder head as specified in claim 1,
**characterised in that**
at least one axial bearing (3) configured as a ball bearing has a bearing ring (9) on the external lateral surface (10) of which a circumferential groove (11) is provided in which a cylinder head-side connecting element (12), in particular a grub screw or a pin, engages.

3. The cylinder head as specified in claim 1,
**characterised in that**
at least one bearing configured as a roller bearing has a roller (13) that directly runs on the camshaft (1), wherein the region (14) of the camshaft (1) coming into contact with the roller (13) is hardened.

4. The cylinder head as specified in claim 1,
**characterised in that**
a sleeve (8) arranged directly on the camshaft (1) is provided in the region of the bearing configured as a roller bearing (2), the roller (13) of the roller bearing rolling on said sleeve.

5. The cylinder head as specified in claim 4,
**characterised in that**
- the sleeve (8) is hardened and/or
- the sleeve (8) is joined to the camshaft (1) by means of adhesive bonding, shrinkage, or welding.

6. The cylinder head as specified in any one of the claims 1 to 5,
**characterised in that**
the at least one axial bearing (3) configured as a ball or roller bearing is directly supported on the cams (5, 5').

7. The cylinder head as specified in any one of the claims 1 to 5,
**characterised in that**
the at least one axial bearing (3) configured as a ball or roller bearing is indirectly supported on the cams (5, 5') by means of two distance elements (6, 6'), in particular by means of two distance sleeves (6, 6').

8. The cylinder head as specified in any one of the claims 1 to 5,
**characterised in that**
the at least one axial bearing (3) configured as a ball or roller bearing is supported on a respective flange (7, 7') of the cams (5, 5'), wherein the respective flange (7, 7') is a component of the respective cam (5, 5').

9. The cylinder head as specified in any one of the claims 1 to 5,
**characterised in that**
the at least one axial bearing (3) configured as a ball or roller bearing is supported on a respective flange (7a, 7b) of the cams (5, 5') that is soldered, welded or affixed on the adjacent cam (5, 5').

10. The cylinder head as specified in any one of the claims 1 to 9,
**characterised in that**
- the cams (5, 5'), and/or the roller bearing (2), and/or the at least one axial bearing (3) is/are connected to the camshaft (1) by means of a thermal joining process, by means of an interference fit assembly, or by means of adhesion,
- only finished cams (5, 5'), and/or roller bearings (2), and/or axial bearings (3), and/or additional elements such as a signalling device wheel are provided for joining with the camshaft (1).

11. The cylinder head as specified in any one of the preceding claims,
**characterised in that**
the camshaft (1) is tunnel mounted or openly mounted in a combustion engine.

12. The cylinder head as specified in any one of the preceding claims,
**characterised in that**
closed roller bearings are applied on the camshaft (1) during camshaft assembly.

## Revendications

1. Culasse d'un moteur à combustion interne comportant un arbre à cames (1), qui est positionnée par l'intermédiaire d'au moins un roulement à rouleaux (2) sur un logement de culasse (15), dans laquelle au moins un palier axial (3) est prévu, lequel positionne l'arbre à cames (1) dans la direction axiale (4) et lequel est configuré comme un roulement à billes ou également comme un roulement à rouleaux,
**caractérisée en ce que**
au moins un palier axial (3) configuré comme un roulement à billes ou un roulement à rouleaux est disposé entre deux cames (5,5') de l'arbre à cames (1).

2. Culasse selon la revendication 1,
**caractérisée en ce que**
au moins un palier axial (3) configuré comme un roulement à billes présente une bague de roulement (9), sur la surface de gaine extérieure (10) de laquelle une rainure (11) circonférentielle est prévue, dans laquelle un élément de liaison (12) du côté de la culasse, notamment une vis sans tête ou une goupille, s'engage.

3. Culasse selon la revendication 1,
**caractérisée en ce que**
au moins un palier configuré comme un palier à rouleaux présente un rouleau (13) circulant directement sur l'arbre à cames (1), dans laquelle la zone (14) de l'arbre à cames (1) venant en contact avec le rouleau (13) est durcie.

4. Culasse selon la revendication 1,
**caractérisée en ce que**
au niveau du palier configuré comme un roulement à rouleaux, une douille (8) disposée directement sur l'arbre à cames (1) est prévue, sur laquelle roule le rouleau (13) du roulement à rouleaux (2).

5. Culasse selon la revendication 4,
**caractérisée en ce que**
- la douille (8) est durcie, et/ou
- la douille (8) est assemblée par collage, rétraction ou soudage avec l'arbre à cames (1).

6. Culasse selon une des revendications 1 à 5,
**caractérisée en ce que**
au moins un palier axial (3) configuré comme un roulement à billes ou un roulement à rouleaux s'appuie directement sur les cames (5,5').

7. Culasse selon une des revendications 1 à 5,
**caractérisée en ce que**
au moins un palier axial (3) configuré comme un roulement à billes ou un roulement à rouleaux s'appuie indirectement par l'intermédiaire de deux éléments d'écartement (6,6'), notamment par l'intermédiaire de deux douilles d'écartement (6,6') sur les cames (5,5').

8. Culasse selon une des revendications 1 à 5,
**caractérisée en ce que**
au moins un palier axial (3) configuré comme un roulement à billes ou un roulement à rouleaux s'appuie sur un collier respectif (7,7') de la came (5,5'), dans laquelle le collier respectif (7,7') est partie intégrante de la came respective (5,5').

9. Culasse selon une des revendications 1 à 5,
**caractérisée en ce que**
au moins un palier axial (3) configuré comme un roulement à billes ou un roulement à rouleaux s'appuie sur un collier (7a,7b) de la came (5,5'), qui est brasé, soudé ou collé sur la came adjacente (5,5').

10. Culasse selon une des revendications 1 à 9,
**caractérisée en ce que**
- les cames (5,5') et/ou le roulement à rouleaux (2) et/ou au moins un palier axial (3) est/sont reliés au moyen d'un procédé d'assemblage thermique, au moyen d'un press-fit ou au moyen du collage à l'arbre à cames (1),
- à des fins d'assemblage avec l'arbre à cames (1), exclusivement des cames à l'usinage fini (5,5') et/ou un roulement à rouleaux (2) et/ou un palier axial (3) et/ou des éléments supplémentaires comme une roue de générateur de signal sont prévus.

11. Culasse selon une des revendications précédentes,
**caractérisée en ce que**
l'arbre à cames (1) est positionné en tunnel ou à découvert dans un moteur à combustion interne.

12. Culasse selon une des revendications précédentes,
**caractérisé en ce que**
les roulements à rouleaux fermés sur l'arbre à cames (1) sont montés pendant le montage de l'arbre à cames.
